# EUROPEAN PATENT APPLICATION

(11) **EP 3 669 820 A1**
(43) Date of publication of application: **24.06.2020**
(21) Application number: 18214605.0
(22) Date of filing: 20.12.2018
(51) Int. Cl.: A61C 13/01, A61C 8/00

(54) **DENTAL PROSTHESIS**

(71) Applicant: Straumann Holding AG, 4002 Basel (CH)
(72) Inventor: MARTIN, Boris, 4002 Basel (CH); SANICOLA, Ivan, 4002 Basel (CH)
(74) Representative: Schaad, Balass, Menzl & Partner AG

(57) **Abstract**

The present invention relates to a dental prosthesis (10) for tooth replacement designed to be fixated to a dental implant system anchored in the patient's jawbone, said prosthesis comprising at least one tooth-like structure (12) and a base (14) onto which the at least one tooth-like structure (12) is mounted. The base (14) comprises a gingiva-mimicking support structure (16), which is at least partially made of a ceramic material and to which the at least one tooth-like structure is fixedly connected, and a contacting structure (28) arranged on a side (30) of the support structure (16) facing away from the at least one tooth-like structure (12) and having a contacting surface (36) designed to be in direct contact with a gingival area of contact (37) in a patient's oral cavity. According to the invention, the contacting structure (28) comprises or essentially consists of a polymeric material.

## Description

The present invention relates to a dental prosthesis, in particular to a complete or partial denture. More particularly, the present invention relates to a dental prosthesis, specifically a denture, designed to be fixated to a dental implant system anchored in a patient's jawbone. The invention further relates to a process for adapting the shape of the dental prosthesis to a gingival area of contact in a patient's oral cavity.

Dentures are prosthetic devices constructed to replace missing teeth. They have been used for many centuries and help people in their ability to chew and to speak as well as in improving their appearance.

In use, dentures are supported by the surrounding soft tissue (gingiva) and hard tissue (bone) of the oral cavity. They can be divided into removable dentures and fixed dentures, which typically are fixated by means of a dental implant anchored in bone.

Depending on whether all or only a portion of teeth of a dental arch (i.e. the maxillary (upper) or mandibular (lower) arch) has to be replaced, dentures can either be complete dentures or partial dentures. Fixed partial dentures include a crown or bridge of a certain number of units, referring to the number of teeth to be replaced.

The traditional form of a denture includes a base (sometimes also referred to as "framework" or "plate"), which contacts the dental arch, and at least one tooth-like structure mounted thereon. The base is used for load bearing and is commonly made of hard plastic or metal. Although more expensive to manufacture, a denture comprising a metal base is typically more tolerable and preferable in terms of obtaining a better hygiene. For aesthetic appearance, metallic bases are generally coated with a gingiva-coloured material, e.g. plastic, ceramic or porcelain.

Conventionally, the process of fabricating a denture includes the step of taking an impression of the maxillary and mandibular dental arch.

Based on the impression, a wax rim is fabricated to assist the dentist or the dental technician in establishing the vertical dimension of occlusion and to place the selected denture teeth in correct position. After the occlusion has been verified by the dentist and the patient, and all phonetic requirements are met, the denture is processed.

Processing a denture is usually performed using a lost-wax technique whereby the form of the final denture, including the denture teeth, is invested in stone. This investment is then heated, and when it melts the wax is removed through a spruing channel. The remaining cavity is then either filled by forced injection or pouring in the uncured denture material.

Alternatively to these lost-wax techniques, more recently developed techniques include the milling of the denture or parts thereof out of a milling block.

In this regard, it is for example referred to EP 0 501 983 which relates to a process for making a dental prosthesis, especially a total prosthesis with an upper and/or lower jaw base, with the aid of a milling device. According to the process, the prosthesis is milled out of a synthetic material block, whereby data on the oral cavity characterizing its contour and topography are being used.

Milling techniques, in particular with the aid of computer aided manufacturing, have the advantage that they allow for a relatively straightforward preparation of all-ceramic, i.e. metal-free, dentures, which have outstanding properties in terms of aesthetics, and which also exhibit a high mechanical stability, durability as well as a high biocompatibility.

In this regard it is further referred to US 2014/0317930 A1, which discloses a method for producing partial or total prosthesis by preparing a milling block, which i.a. can be made of a ceramic material.

Despite their superior characteristics in terms of aesthetics, mechanical stability and biocompatibility, ceramic dentures are relatively heavy and - given the hardness of the material - are difficult to process. This limited processability of ceramic dentures has important implications, as discussed in the following.

Over a prolonged wearing time of the denture, bone resorption phenomena can lead to a continuous change in the shape of the natural bone structure on which the prosthesis is arranged. This can ultimately result in the situation that a tight fit of the prosthesis in the oral cavity is no longer given.

These phenomena are aggravated by the fact that natural bone needs a stimulus to re-new its own cells. The balance between bone resorption (osteoclastic activity) and new-formation of bone cells (osteoblastic activity) is triggered by mechanical load, specifically by stimulation of pressure-activated receptors located in the bone. Consequently, if load is transmitted to the bone, new bone-formation is triggered.

In the absence of stimuli, however, which is the case if no natural tooth or no implant is present that transmits load to the bone tissue, only the metabolic function, i.e. degeneration of bone material, is acting and bone resorption will occur. This may ultimately result in the patient suffering from phonetic interference, unaesthetic outcome and problems during mastication of food.

Apart from bone resorption, other phenomena, such as bone growth or sinking of the implant, might cause a change of the oral cavity's geometry in relation to the position of the denture. This can ultimately lead to the situation that a change of the shape of the denture is required to ensure that a tight fit with the area of contact is established again.

Given their very high hardness and, hence, their limited processability, a change in the shape of current ceramic dentures requires in most cases a complete replacement of the denture by a new denture, which entails both a waiting time as well as high cost for the patient.

In consideration of these shortcomings, an object of the present invention is therefore to provide a dental prosthesis, in particular a denture, which provides an aesthetically appealing appearance as well as the mechanical stability of known ceramic prostheses and which at the same time allows for facile and quick adaptation of the dental prosthesis' shape to accommodate changes of the natural structure in the area of contact. Ultimately, an extended life span of the dental prosthesis shall thus be obtained.

The object is achieved by the dental prosthesis defined in independent claim 1. Preferred embodiments of the dental prosthesis according to the present invention are defined in the dependent claims.

According to claim 1, the dental prosthesis comprises at least one tooth-like structure and a base onto which the at least one tooth-like structure is mounted.

The base comprises a gingiva-mimicking support structure, which is at least partially made of a ceramic material and to which the at least one tooth-like structure is fixedly connected.

Due to the use of a ceramic material, the support structure has a high hardness and strength, in particular a high fracture toughness, thus providing a high mechanical stability to the dental prosthesis. Given that the stabilizing and load-bearing function is to a major part assumed by the support structure, the material of the tooth-like structures can be chosen from a wide range of biocompatible materials, including materials not complying with IS06872:2015, as will be discussed in more detail below.

In addition, an aesthetically appealing colour can be obtained owed to the use of a ceramic material for the support structure, in particular a colour which closely matches the colour of the surrounding gingiva, as will also be discussed in more detail below. Typically, at least a part of the outer surface of the gingiva-mimicking support structure is thus exposed and, in use, visible to the human eye. This is quite in contrast to the case where a support structure of e.g. metallic material is used, which in order to be aesthetically acceptable has to be covered by a more naturally-looking material, as it is for example the case in the prosthesis described in WO 2013/123468.

In contrast to known prostheses comprising a ceramic support structure, such as the one described in US 2014/0317930 A1, the base according to the present invention further comprises a contacting structure comprising or essentially consisting of a polymeric material. This contacting structure is arranged on a side of the support structure facing away from the at least one tooth-like structure, specifically on the apical side of the support structure, and has a contacting surface designed to be in direct contact with a gingival area of contact in a patient's oral cavity. Specifically, the contacting surface is designed to be in direct contact with the patient's gingiva in an area of the dental arch and/or palate.

The use of a polymeric material for the contacting structure allows the dentist or the dental practitioner to flexibly adapt the shape of the contacting structure, and in particular the topography of the contacting surface, to the natural situation, such that it fits tightly to the area of contact.

Due to the replacement of a portion of the base's ceramic material by a polymeric material, which in comparison to the ceramic material has a lower specific weight, a dental prosthesis of relatively low weight can be obtained. Thus, the present invention allows to more closely mimic the anatomical conditions in terms of weight as it is the case for conventional full ceramic dental prostheses, which typically may have a weight of about 160 g and are, thus, of much higher weight than the natural tooth and gingiva.

Depending on whether the main focus is on providing a high mechanical stability or on providing a low weight of the prosthesis, the optimum volume proportion of the contacting structure in the base (and, thus, the volume ratio of the low-weight polymeric material of the contacting structure to the highly stable ceramic material of the support structure) can vary significantly. According to a preferred embodiment, the volume proportion of the contacting structure in the base ranges from 10 vol-% to 90 vol-% based on the total volume of the base, more preferably from 20 vol-% to 80 vol-%, and most preferably from 30 vol-% to 70 vol-%.

As mentioned, the use of a ceramic material further allows an aesthetically appealing colour to be obtained for the base closely resembling the colour of the surrounding tissue.

In this regard, it is particularly preferred that the ceramic material of the support structure has a colour C₁ complying with the following requirements in the CIELAB colour space:
L* being from 27.8 to 60.5
a* being from 5.1 to 28.9, and
b* being from -6.8 to 14.5.

More preferably, L* is from 29.8 to 58.5, most preferably from 31.8 to 56.5. Regarding a*, more preferred values are from 7.1 to 26.9, most preferred from 9.1 to 24.9. Regarding b*, more preferred values are from -4.8 to 12.5 and most preferred from -2.8 to 10.5.

Thus, the colour of the gingiva-mimicking support structure lies within a range in the CIELAB colour space corresponding to the range of natural gingiva. As a consequence of using a ceramic material pre-shaded to colour C₁, further colouring efforts can be reduced or eliminated.

Depending on its indication, the ceramic material of the support structure complies with the respective class (categorized in class 1 to 5) according to ISO 6872:2015. As mentioned above, the function of providing a high mechanical stability of the prosthesis is therefore mainly assumed by the support structure. Preferably, the ceramic material of the support structure complies with the requirements of class 5 of ISO 6872:2015 in order to cover all possible indications up to reconstructions with 16 units (full arch reconstructions).

Specifically, the ceramic material of the support structure can be a zirconia ceramic including commercially available zirconia ceramics such as Lava™ Plus (by 3M) or zerion® LT (by Straumann).

According to a particularly preferred embodiment, the ceramic material of the support structure is a zirconia ceramic comprising erbium or an erbium compound, in particular Er₂O₃, the presence of which has been found to impart a red or pink shading to the zirconia ceramic. By using this material, both a high mechanical strength as well as an aesthetically highly appealing appearance of the support structure and, hence, of the total prosthesis can be achieved.

Specifically, the ceramic material of the support structure comprises ZrO₂, Er₂O₃ and optionally HfO₂, the sum of these oxides amounting to at least 99 wt-% based on the total weight of the ceramic material. More specifically, the ceramic material of the support structure comprises Er₂O₃ in an amount of 8.8 to 9.8 wt-%. In this regard, it is further preferred that the amount of HfO₂ is less than 5 wt-%, the amount of Al₂O₃ is from 0.01 to 0.1 wt-%, and the amount of other oxides is up to 0.9 wt-%, preferably up to 0.5 wt-%. By changing the amount of the erbium compound, specifically Er₂O₃, within the ranges defined above, the shading of the ceramic material can be adapted.

In analogy to the above, it is further preferred that the contacting structure has a colour C₂ complying with the following requirements in the CIELAB colour space:
L* being from 27.8 to 60.5
a* being from 5.1 to 28.9, and
b* being from -6.8 to 14.5.

In further analogy to the specifications of colour C₁ of the supporting structure, it is preferred that also for colour C₂ L* is from 29.8 to 58.5, most preferably from 31.8 to 56.5. Regarding a* of colour C₂, more preferred values are from 7.1 to 26.9, most preferred from 9.1 to 24.9. Regarding b* of colour C₂, more preferred values are from -4.8 to 12.5 and most preferred from -2.8 to 10.5.

Thus, also the colour of the contacting structure can be closely matched to the colour of the surrounding gingiva, which further contributes to the high aesthetic appeal of the dental prosthesis.

For the *ab initio* preparation of the dental prosthesis, the contacting structure is typically milled out of a blank, specifically by using CAD/CAM techniques, *i.e.* by using a digital image reflecting the geometry given in the oral cavity of the patient. The contacting structure thereby obtained is then fixedly connected to the ceramic support structure to obtain the final form of the dental prosthesis to be placed in the patient's oral cavity.

In the state where it is fixedly connected with the support structure, the contacting structure's shape can most easily be adapted by moulding of additional polymeric material onto its surface or on the surface of the support structure and/or by plastic deformation of the polymeric material. At this stage, the mentioned techniques are favourable over milling.

As mentioned, the polymeric material of the contacting structure is mouldable. It can thus be plastically deformed to adapt the shape of the contacting structure individually to the contour of the gingival area of contact in the patient's oral cavity. In this regard, it is particularly preferred that the polymeric material of the contacting structure is a thermoplast, allowing moulding the material onto the existing contacting structure and/or plastically deforming at least a part of the polymeric material of the existing contacting structure by heating the material to the required temperature and fixing the obtained shape by cooling. To this end, an impression of the natural topography may be taken and transferred to a master model, which then serves as a "negative" for imprinting the respective topography onto the heated material of the contacting structure.

Another technique to adapt the shape of the contacting structure includes cold-cure polymerization. According to this technique, a liquid is applied onto the surface of the support structure or of the existing contacting structure followed by polymerization of the liquid. By selectively applying the polymerizable liquid on the surface, the desired shape of the polymeric material can be achieved, which is chemically bonded and thus firmly attached to the underlying structure. Like the above-mentioned techniques using a thermoplast, also cold-cure polymerization allows for a very quick and cost efficient adaptation of the shape of the existing dental prosthesis to changes occurring in the bone structure of the patient.

Given its modular construction, the dental prosthesis' shape can also be adapted by replacing the existing contacting structure with a newly formed contacting structure, which is preferably prepared by being milled out of a blank using a digital image reflecting the (changed) geometry given in the oral cavity, as mentioned above. In this regard, the existing contacting structure is preferably removed in a machining step, followed by fixedly connecting the newly formed contacting structure to the support structure.

The polymeric material of the contacting structure can further be a polymer with elastomeric behaviour. It is in this regard also thinkable that the polymeric material is a thermoplastic elastomer.

Specifically, the polymeric material of the contacting structure complies with the requirements of ISO 10993 and is therefore biocompatible.

More specifically, the polymeric material is a non-toxic, curable, non-water-soluble plastic polymer, such as an acrylic polymer, nylon, polycarbonate, ABS (acrylonitrile butadiene styrene) plastic, a urethane dimethacrylate/acrylic copolymer, TPU (thermoplastic polyurethane elastomer) or butadiene-styrene rubber.

According to a particularly preferred embodiment, the polymeric material is an acrylic polymer. More particularly, methacrylates can be used as monomers for the production of synthetic denture base materials, in particular for gingiva-coloured denture bases, while polycarbonates, polyacetates, polyamides and luxene® are also thinkable. "Denture base materials" or "denture base polymers" are defined in DIN EN ISO 1567 and can be classified into four different types, namely heat-polymerizable polymers (type 1), cold-polymerizable polymers (type 2), casting materials (type 3) and thermoplastic materials/granules (type 4). Denture base materials are often provided as powder-liquid-systems, in which the liquid consists to about 90% of methyl methacrylate (MMA), 8% cross-linking agent (e.g. butandiol dimethylacrylate) and about 2% additives, such as stabilizers, specifically UV-stabilizers). The coloured powder consists to about 99% of PMMA-pearl polymer and 1% of dibenzoylperoxide as initiator.

Most preferably, the polymeric material is polymethylmethacrylate (PMMA). PMMA is a polyfunctional methacrylate and has the advantage that it shows less polymerization shrinkage and lower water absorption compared to mono- or bi-functional methacrylates. PMMA has therefore the advantage that is not soluble in water and due to its minimal water absorption, it shows no or only minimal swelling when contacted with water. In addition, this material has been found to be suitable for very simple processing and further complies with all requirements of a denture polymer, in particular a high mechanical strength and biocompatibility. Heat-polymerizing PMMA is preferred over cold-polymerizing PMMA, since the former has shown to provide increased flexural strength and durability. Specific preferred examples of the material for the contacting structure include M-PM Disc Pink (from Merz Dental GmbH), polycon® ae (from Straumann), PMMA Rosa Disk (from Johannes Weithaus Dental-Kunststoffe), CC DISK PMMA Pink (from Interdent) and pink PMMA - CE 0470.

Apart from moulding the polymeric material onto the existing contacting structure and/or from plastically deforming at least a part of the polymeric material of the contacting structure, the shape of the contacting structure and, thus, the topography of the contacting surface can also be adapted by removing at least a part of the polymeric material. In this regard, it is particularly preferred that only the polymeric material of the base is removed.

Typically, the dental prosthesis of the present invention is designed to be fixated to a dental implant system anchored in the patient's jawbone, in particular by a direct connection between the dental implant system and the base, preferably its contacting structure. Given its modular construction discussed above comprising structures of different materials, the dental prosthesis according to this embodiment thus forms a "multi material adaptable screw retained hybrid denture".

Fixation is preferably performed by gluing or cementing the dental prosthesis onto the implant system, and in particular onto its abutment, which is fixedly connected to the implant by means of a screw.

It is in this regard particularly preferred that gluing or cementing of the dental prosthesis onto the abutment is carried out outside the oral cavity and thus before establishing the screw connection between the abutment and the implant. To this end, the dental prosthesis preferably comprises a screw channel, which extends through the prosthesis from its coronal side to its apical side and which allows insertion and fastening of the screw from the coronal side, i.e. the side facing away from the abutment. In other words, a screw channel opening is formed both on the coronal side as well as on the apical side of the dental prosthesis, thus allowing insertion of the screw from the side remote from the abutment and applying torque to the screw for fixation of the abutment with the dental implant.

In having in general a higher flexibility, in particular a higher elasticity, the polymeric material of the contacting structure is able to deform elastically. When relatively high forces are acting on the dental prosthesis, the elastic deformation of the polymeric material and the resulting "suspension effect" significantly reduces the risk of breaking of the dental prosthesis and the dental implant system to which it is fixated, thereby further contributing to a long lifetime. In particular in view of this suspension effect, it is particularly preferred that the contacting structure is designed such that fixation of the prosthesis is established by a direct connection between the implant the dental implant system and the contacting structure.

As mentioned above, the gingiva-mimicking support structure is at least partially made of a ceramic material. According to a more specific embodiment, the support structure is essentially metal-free. Still more specifically, the support structure essentially consists of the ceramic material.

Like the support structure and the contacting structure, also the tooth-like structure is typically processed through a CAD/CAM workflow including the step of milling a block to obtain a shape of these structures fitting into the natural surroundings.

The at least one tooth-like structure is preferably made of a ceramic, a glass-ceramic and/or a polymeric material. Due to the use of ceramic material, the support structure provides for a very high mechanical stability and specifically is able to stabilize full arch reconstructions. This allows the material of the tooth-like structure to be chosen from a relatively wide range of materials, as mentioned above. In particular, the present invention allows a material to be used for the tooth-like structure which in terms of mechanical stability does not comply with the requirements of any of the classes defined in IS06872:2015.

According to a preferred embodiment, the at least one tooth-like structure is made of a ceramic, among which zirconia ceramics are particularly preferred. Zirconia (zirconium oxide, ZrO₂) is a polycrystalline ceramic material that is essentially glass-free and exhibits high flexural strength and a low thermal expansion coefficient. The tooth-like structure is generally first formed from the zirconia material as a green body that is subsequently sintered. The sintering causes a densification of the ceramic material within the green body, which results in an overall volume reduction of up to 40%.

Examples of zirconia ceramics include KATANA Zirconia (of Kuraray Noritake Dental Inc.), Ceramill Zolid FX (by Amann Girrbach), Z-CAD® smile (by Metoxit), Lava™ Plus (by 3M).

According to a particularly preferred embodiment, 5 mol-% yttria-stabilized zirconia (ultra-high translucent zirconia) is used for one or more of the at least one tooth-like structure. Yttria-stabilized zirconia (Y-TZP) is generally polycrystalline and stabilized in the tetragonal phase. Owed to the mechanical stability provided by the support structure complying with class 5 of IS06872:2015, ultra-high translucent zirconia can according to the present invention also be used in the case where the prosthesis is a denture or bridge having more than three tooth-like structures (or "units"), which in conventional designs require a material of higher strength to be used for the tooth-like structures.

The present invention thus allows a material of very high aesthetical properties to be used for full arch reconstructions without facing the problem that arises when using this material in conventional designs of more than three unit bridges. In particular, there is according to the present invention no requirement to manufacture bridges of three units at most, which have then to be glued or cemented together, in order to arrive at a prosthetic of a higher unit number, or to use 3 mol-% yttria-stabilized zirconia (high translucent zirconia) which at the cost of a higher mechanical strength has a less appealing appearance than ultra-high translucent zirconia.

Also, the ability to use this highly aesthetic material reduces the manual effort of the dental technician to achieve a satisfactory outcome. In particular, the manual effort is much lower than for current ZrO₂ dentures, which are milled out of a zirconia block with a certain "cut back" and which are then filled with high translucent ceramic material by hand and re-fired to reach the translucency.

Ultimately, the present invention thus allows an aesthetically highly appealing solution of the tooth-like structure and therefore of the prosthetic structure to be obtained at a very low effort.

Although the dental prosthesis of the present invention also encompasses embodiments comprising one, two or three units, it is preferred that the prosthesis, and in particular the denture or bridge, comprises four units, five units, six units, seven units, eight units, nine units, ten units, eleven units, twelve units, thirteen units, fourteen units, fifteen units or sixteen units (relating to a full arch reconstruction, as mentioned above). This preference is due to the fact that the above-mentioned advantages achieved by the present invention (in particular in view of achieving a prosthesis of low weight and of sufficient stability also when using ultra-high translucent zirconia for the tooth-like structures) are particularly apparent for a prosthesis comprising more than three units.

For every single tooth-like structure, the respective material can be selectively chosen from the above group consisting of a ceramic, a glass-ceramic and a polymeric material. This allows a very wide range of patients to be treated. For a bruxism patient, for example, a polymeric exchangeable material can be used for the molar tooth-like structure, whereas a ceramic material can be chosen for the tooth-like structures in the aesthetic region. When the situation occurs that the tooth-like structures in the molar region are ground down, they can be easily replaced or replenished by the dental practitioner, while leaving the tooth-like structures in the aesthetic region unchanged.

For connecting the at least one tooth-like structure in the support structure and for connecting the support structure to the contacting structure, different techniques can be applied. If the tooth-like structure is made of a ceramic material, it is preferably connected to the support structure by means of glass soldering, by gluing or cementing or by screwing. If the tooth-like structure is made of a polymeric material, it is preferable connected to the support structure by means of gluing or cementing, by screwing or by press-fit.

Typically, the tooth-like structure is partially embedded in the ceramic material of the support structure. In more specific terms, an apical part of the tooth-like structure is embedded in the ceramic material such that a coronal part of the tooth-like structure extends beyond a mounting surface of the support structure. Thus, the tooth-like structure is anchored within the support structure in a solid manner able to withstand also relatively high lateral forces.

The connection between the support structure and the polymeric contacting structure is preferably made by means of gluing or cementing, by screwing or by press-fit. In order to allow for a strong connection and a solid lateral support, it can be preferred that the contacting structure can be shaped to comprise a socket or ridge fitted into a respective recess of the support structure. However, it is also thinkable that the contacting structure is arranged on the support structure in the form of one or multiple layer(s).

With regard to the connection between the polymeric contacting structure and the dental implant system anchored in the patient's jaw bone, in particular its abutment, connection is preferably made by means of gluing and/or cementing.

The CIELAB colour space (or CIE L*a*b* colour space), to which the present invention relates to in defining the colour of the respective material of the support structure and the contacting structure, is well-known to a skilled person and relates to a colour space specified by the International Commission on Illumination ("Commission internationale de l'éclairage") for describing all the colours visible to the human eye.

The three coordinates of the CIELAB colour space represent the lightness of the colour (L* = 0 yields black and L* = 100 indicates diffuse white), its position between red and green (a*, negative values indicate green while positive values indicate red) and its position between yellow and blue (b*, negative values indicate blue and positive values indicate yellow).

Specifically, L*, a* and b* can be determined using a spectrophotometer, and more specifically by UltraScan PRO from HunterLab (Murnau am Staffelsee, Germany). More specifically, L*, a* and b* are determined in reflection mode with setting RSEX, i.e. Reflectance Specular Excluded, meaning that light directly reflected on the surface is filtered out.

As mentioned, the present invention allows the dentist or the dental practitioner to flexibly adapt the shape of the dental prosthesis, and in particular the topography of the contacting surface, to the natural situation, such that it fits tightly to the area of contact.

According to a further aspect, the present invention thus also relates to a process for adapting the shape of a dental prosthesis as described above to a gingival area of contact in a patient's oral cavity, said process comprising at least one of the following steps:
a) applying polymeric material onto the support structure on its side facing away from the at least one tooth-like structure or onto the contacting structure arranged on the support structure;
b) plastically deforming at least a part of the polymeric material of the contacting structure; and
c) removing at least a part of the polymeric material from the contacting structure.

The term "applying polymeric material" as used in the context of the present invention is to be interpreted broadly and in particular encompasses the moulding of e.g. a thermoplast or of a cold-curing material. The term also encompasses the application of a solid contacting structure, in particular a contacting structure that has been formed by milling.

It is understood that the process can include one of the mentioned steps alone or any combination with at least one of the other steps. In particular, the process encompasses embodiments in which the existing contacting structure is removed from the support structure, e.g. in a machining step, followed by fixedly connecting a newly formed contacting structure to the support structure.

The present invention is further illustrated by way of the attached drawings, of which
- Fig. 1: shows a perspective view of a dental prosthesis according to the present invention; and
- Fig. 2: shows schematically a cross-sectional view of a dental prosthesis according to the present invention in longitudinal section.

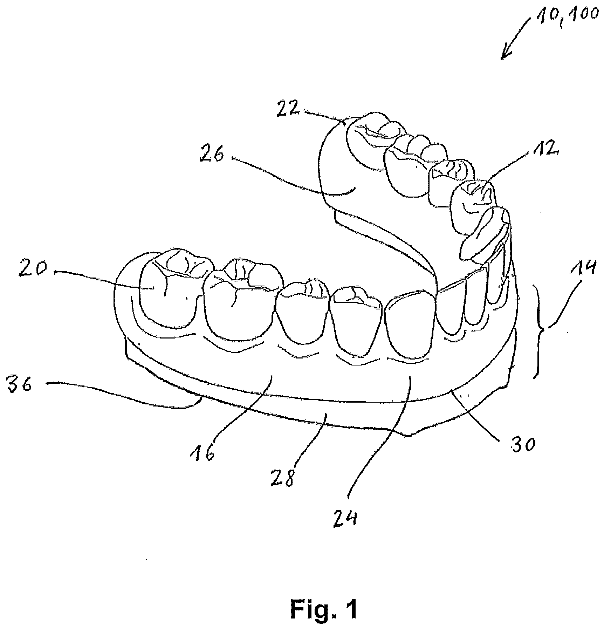

The embodiment shown in Fig. 1 relates to a dental prosthesis 10 in the form of a denture 100, specifically a mandibular denture 1001. The exemplary denture 100 comprises fourteen tooth-like structures 12 (or units) corresponding to teeth of the mandibular dental arch. These tooth-like structures 12 are mounted on an arcuated base 14. The tooth-like structures 12 have a tooth-like colour and shape which the dental technician can specifically choose to fit aesthetically within the natural surroundings.

The base 14 comprises a support structure 16, which is made of a ceramic material and in which an apical region 18 of the tooth-like structures 12 is embedded such that a coronal region 20 of the tooth-like structure 12 extends beyond a top surface 22 of the support structure 16.

The outer contour of the support structure 16, in particular its top surface 22 and its lateral surfaces 24, 26, is shaped to accommodate the geometry present in the oral cavity of the patient. Also, the colour of the support structure 16 is adapted to the surrounding gingiva. In use, the top surface 22 and the lateral surfaces 24, 26 are therefore visibly exposed.

The base further comprises a contacting structure 28 arranged on a side 30 of the support structure 16 facing away from the tooth-like structures 12, i.e. the bottom side of the support structure 16.

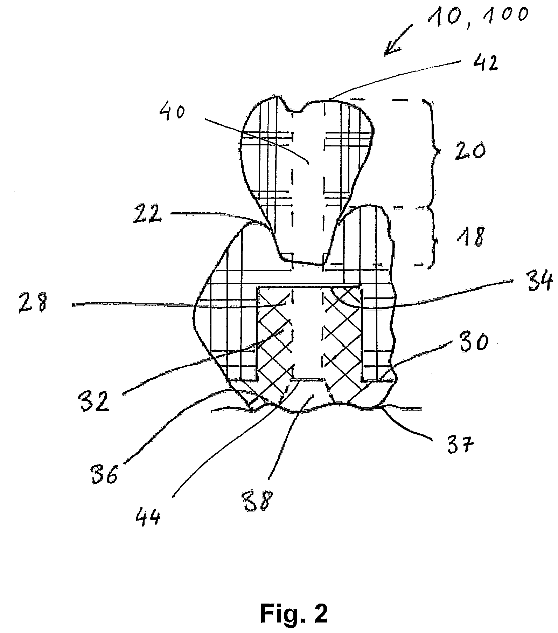

According to the specific embodiment shown in Fig. 2, the contacting structure 28 is shaped to comprise an arcuated ridge 32 fitted into a respective recess 34 of the support structure 16, thus providing a good connection and a solid support of the supporting structure 16 on the contacting structure 28.

On its bottom side, the contacting structure 28 has a contacting surface 36 which is shaped to abut a gingival area of contact 37 in the patient's oral cavity. The contacting structure 28 comprises or essentially consists of a polymeric material.

In use, the denture is fixated to the abutment of a dental implant system anchored in the patient's jaw bone by directly connecting the abutment with the contacting structure 28 on an abutment interface 38.

Specifically, the denture 100 is glued or cemented onto the abutment outside the oral cavity and thus before establishing the screw connection between the abutment and the implant. In the exemplary embodiment shown in Fig. 2, the denture therefore comprises a screw channel 40, which extends through the denture 100 from its coronal side 42 (i.e. the side where the tooth-like structures are arranged) to its apical side 44 (i.e. the side where the abutment is arranged). After cementation or gluing of the abutment, the whole construction comprising the denture 100 and the abutment is placed on the gingival area of contact 37 and a screw is inserted through the screw channel 40. The screw is then fastened by means of a fastening device inserted from the coronal side 42 and reaching down to the screw to transmit torque to the screw. If changes in the bone structure of the patient occur, the denture can be removed from the oral cavity and the shape of the contacting structure and in particular the topography of the contacting surface can be quickly and cost-efficiently adapted. This can for example be achieved by moulding polymeric material onto the initial contacting structure, by plastically deforming at least a part of the polymeric material of the contacting surface and/or by removing at least a part of the polymeric material from the contacting structure.

### List of reference numerals

- 10; 100: dental prosthesis; denture
- 12: tooth-like structure
- 14: base
- 16: support structure
- 18: apical region of tooth-like structure
- 20: coronal region of tooth-like structure
- 22: top surface of base
- 24: outer lateral surface
- 26: inner lateral surface
- 28: contacting structure
- 30: side of the support structure facing away from the tooth-like structures
- 32: ridge of the contacting structure
- 34: recess of the support structure
- 36: contacting surface
- 37: gingival area of contact
- 38: abutment interface
- 40: screw channel
- 42: coronal side of the denture
- 44: apical side of the denture

## Claims

1. Dental prosthesis (10) for tooth replacement, the prosthesis being designed to be fixated to a dental implant system anchored in the patient's jawbone and comprising
at least one tooth-like structure (12) and
a base (14) onto which the at least one tooth-like structure (12) is mounted,
the base (14) comprising a gingiva-mimicking support structure (16), which is at least partially made of a ceramic material and to which the at least one tooth-like structure is fixedly connected, and
a contacting structure (28) arranged on a side (30) of the support structure (16) facing away from the at least one tooth-like structure (12) and having a contacting surface (36) designed to be in direct contact with a gingival area of contact (37) in a patient's oral cavity,
wherein the contacting structure (28) comprises or essentially consists of a polymeric material.

2. Dental prosthesis according to claim 1, wherein the contacting surface (28) is designed to be in direct contact with the patient's gingiva in an area of the dental arch and/or palate.

3. Dental prosthesis according to any of the preceding claims, wherein the prosthesis (10) is a full or partial denture (100), in particular a denture comprising more than three tooth-like structures (12) .

4. Dental prosthesis according to any of the preceding claims, wherein the prosthesis (10) is designed to be fixated to a dental implant system anchored in the patient's jawbone by a direct connection between the dental implant system and the base (14), preferably the contacting structure (28).

5. Dental prosthesis according to any of the preceding claims, wherein it comprises a screw channel (40), which extends through the prosthesis (10) from its coronal side (42) to its apical side (44).

6. Dental prosthesis according to any of the preceding claims, wherein the volume proportion of the contacting structure (28) in the base (14) ranges from 10 vol-% to 90 vol-% based on the total volume of the base (14), preferably from 20 vol-% to 80 vol-%, and most preferably from 30 vol-% to 70 vol-%.

7. Dental prosthesis according to any of the preceding claims, wherein the ceramic material of the support structure (16) has a colour C₁ complying with the following requirements in the CIELAB colour space:
L* being from 27.8 to 60.5
a* being from 5.1 to 28.9, and
b* being from -6.8 to 14.5.

8. Dental prosthesis according to any of the preceding claims, wherein the polymeric material of the contacting structure (28) has a colour C₂ complying with the following requirements in the CIELAB colour space:
L* being from 27.8 to 60.5
a* being from 5.1 to 28.9, and
b* being from -6.8 to 14.5.

9. Dental prosthesis according to any of the preceding claims, wherein the polymeric material of the contacting structure (28) is mouldable, and in particular is a thermoplast.

10. Dental prosthesis according to any of the preceding claims, wherein the polymeric material of the contacting structure (28) is an acrylic polymer, and preferably is polymethylmethacrylate (PMMA).

11. Dental prosthesis according to any of the preceding claims, wherein the ceramic material of the support structure (16) comprises ZrO₂, Er₂O₃ and optionally HfO₂, the sum of these oxides amounting to at least 99 wt-% based on the total weight of the ceramic material.

12. Dental prosthesis according to any of the preceding claims, wherein the ceramic material of the support structure (16) comprises Er₂O₃ in an amount of 8.8 to 9.8 wt-%.

13. Dental prosthesis according to any of the preceding claims, wherein the ceramic material of the support structure (16) meets the requirements of class 5 according to ISO 6872:2015.

14. Dental prosthesis according to any of the preceding claims, wherein one or more of the at least one tooth-like structure (12) is made of 5 mol-% yttria-stabilized zirconia.

15. Process for adapting the shape of a dental prosthesis (10) according to any of the preceding claims to a gingival area of contact (37) in a patient's oral cavity, said process comprising the step of
a) moulding polymeric material onto the support structure (16) on its side (30) facing away from the at least one tooth-like structure or onto the contacting structure (28) arranged on the support structure (16);
b) plastically deforming at least a part of the polymeric material of the contacting structure (28); and/or
c) removing at least a part of the polymeric material from the contacting structure (28).
